# EUROPÄISCHE PATENTSCHRIFT

(11) **EP 3 143 870 B1**
(45) Veröffentlichungstag und Bekanntmachung des Hinweises auf die Patenterteilung: **09.08.2017**
(21) Anmeldenummer: 15185659.8
(22) Anmeldetag: 17.09.2015
(51) Int. Cl.: A01G 9/10, A01G 31/00

(54) **HOLZFASERMATTE ZUR VERWENDUNG ALS PFLANZENSUBSTRAT**
WOOD FIBRE MAT FOR USE AS PLANT SUBSTRATE
TAPIS DE FIBRES DE BOIS DESTINE A ETRE UTILISE COMME SUBSTRAT VEGETAL

(43) Veröffentlichungstag der Anmeldung: 22.03.2017
(60) Teilanmeldung: 17172439.6
(73) Patentinhaber: SWISS KRONO Tec AG, 6004 Luzern (CH)
(72) Erfinder: KALWA, Norbert, 32805 Horn-Bad Meinberg (DE); PFEIFFER, Sabrina, 16866 Kyritz (DE)
(74) Vertreter: Maikowski & Ninnemann Patentanwälte Partnerschaft mbB

(56) Entgegenhaltungen:
- DE-A1- 10 060 158
- DE-A1-102006 038 901
- US-A1- 2012 278 956

## Beschreibung

Die vorliegende Erfindung betrifft eine Holzfasermatte zur Verwendung als Pflanzensubstrat gemäß Anspruch 1, deren Verwendung gemäß Anspruch 12 und Verfahren zu deren Herstellung gemäß der Ansprüche 13-15.

### Beschreibung

In der Landwirtschaft und im Gartenbau werden insbesondere in Gewächshäusern mehr und mehr Produkte eingesetzt, die die Aufzucht von Pflanzen verbessern, erleichtern und verbilligen sollen. Ein wichtiger Aspekt ist in diesem Zusammenhang eine exakte Einstellung des Nährstoffgehaltes für die Pflanzen.

Ein Ansatz bildet in diesem Zusammenhang die Verwendung von geeigneten Substratkomponenten, die über gute Dränageeigenschaften in Verbindung mit einem geringen Nährstoffgehalt, hoher Strukturstabilität und guter Luftführung verfügen. Die gewünschten Werte für den Nährstoffgehalt und pH-Wert können durch Kalkung und Düngung exakt eingestellt werden.

Als traditionell bevorzugte Substratkomponente wird häufig Torf eingesetzt. Torf lässt sich gut und schnell verteilen und ist ein ideales Substratausgangsmaterial mit einstellbarer Wasserkapazität. Torf, insbesondere der Weißtorf, weist eine gute Luftführung auch bei Wassersättigung auf, während Schwarztorf über eine höhere Kationenaustauschkapazität und bessere pH-Pufferung verfügt. Torf wird traditionell aus Hochmooren und Niedermooren gewonnen, was in zunehmenden Maße ökologisch nicht vertretbar ist. Aufgrund des hohen Bedarfes an Torf werden diese zunehmend importiert, was zu hohen Kosten führt und ebenfalls im Abbauland ökologische Schäden hinterlässt.

Neben Torf ist eine Vielzahl von weiteren möglichen Substratkomponenten bekannt. So wird zunehmend der Einsatz von Xylit (Vorstufe der Braunkohle), mineralischen Substraten wie Vermiculit, poröses Vulkangestein, Ölschiefer oder auch Steinwolle diskutiert. Die DE 10 2006 038 901 A1 offenbart ein biosynthetisches Substrat auf Basis von Zellulosefasern. In der DE 40 24 727 A1 wird ein Mineralwolleprodukt mit hydrophilen Eigenschaften zur Verwendung als Dünge- und Aufwuchsubstrat für Pflanzen beschrieben, welches sich insbesondere zur Dachbegrünung eignet. Das Hydrophilierungsmittel enthält neben einem hydrophoben Bindemittel eine wasserlösliche Stickstoff-Carbonyl-Verbindung, wie zum Beispiel Harnstoff, ein wässriges Mikrosol eines Acrylharzes und ein Tensid.

Die Mineralwolle kann auch mit Wasser absorbierenden Mitteln wie pyrogener Kieselsäure, Tonmineralien, Aluminiumoxid oder einem organischen Superabsorber wie z.B. einem Acrylamid/Acrylsäure-Copolymerisat zur Verbesserung des Wasserrückhaltevermögens versehen werden (DE 4035249 A1).

Insbesondere bei der Verwendung von Steinwolle bzw. Mineralwolle als Pflanzensubstrat, ergeben sich eine Reihe von Nachteilen. So ist die Herstellung von Steinwolle Energieintensiv, und eine ökologische Entsorgung ist nicht oder nur schwer möglich, z.B. ist die Beimengung von verkleinerter Steinwolle zu erdigen Substraten ökologisch umstritten. Zwar besteht die Möglichkeit der Wiederverwertung von Steinwolle durch Beimengung beispielsweise bei der Ziegelherstellung, insgesamt bleibt jedoch festzustellen, dass die Wiederverwertung von Steinwolle unzureichend gelöst ist.

Entsprechend stellt die Entsorgung der Substratkomponenten ein Problem dar, das sich sowohl vom Aufwand als auch von den Kosten negativ auf die Produkte auswirkt.

Als eine weitere Alternative für Substratkomponenten hat sich seit den 1990er Jahren die Verwendung von Holzfasern etabliert. Zunächst wurden Holzfasern als Torfersatzstoff in Blumenerden verwendet, besitzen mittlerweile jedoch eine wichtige Bedeutung als organische Substratkomponente im Gartenbau. Holzfasern kommen häufig in Mischungen mit reduzierten oder ohne Torfanteil zum Einsatz. Von allen Torfersatzstoffen ist die Holzfaser in ihren Eigenschaften dem Torf mit Ausnahme der Wasserkapazität am ähnlichsten. Holzfasern weisen dank ihrer Porenstrukturen eine deutlich höhere Luftkapazität als Torf auf und sind grundsätzlich Unkrautfrei. Die lockere Struktur der Holzfasern bedingt gute Dränageeigenschaften und macht die Substrate vergießfest bzw. strukturstabil.

Ein verpresster Formkörper, insbesondere zur Pflanzenanzucht oder -kultur, enthaltend mindestens ein Funktionsmaterial, ausgewählt aus der Gruppe der Holzfaserstoffe, zellstoffhaltigen Materialien und/oder Kokosmesokarpmaterialien, ist aus der DE 100 60 158 A1 bekannt.

Ein wesentlicher Nachteil der Holzfasern besteht allerdings darin, dass die hohe Luftkapazität zulasten einer vergleichsweise geringen Wasserkapazität geht.

Substratkomponenten auf Basis von Holzfasermatten haben zudem den Nachteil, dass sie bei hohen Feuchten bzw. Luftfeuchten zum Schimmel neigen und dann für eine mehrmalige Nutzung nicht zur Verfügung stehen.

Der vorliegenden Erfindung liegt daher die technische Aufgabe zugrunde, Holzfasern so auszustatten, dass die Wasserspeicherkapazität signifikant erhöht wird, wobei keine Vorprodukte eingesetzt werden sollen, die im Hinblick auf die Entsorgung problematisch sind. Weiter soll durch den Holzfasern zu zuführenden Inhaltsstoffen den auf den Holzfasern als Substratkomponente wachsenden Pflanzen ein Teil der benötigten Spurenelemente und Dünger zur Verfügung gestellt werden. Auch soll sich das Produkt im Hinblick auf sein gesamtes ökologisches Profil, wie Herstellung aus nachwachsenden Rohstoffen, geringer Energiebedarf bei der Herstellung, einfache Entsorgung wegen biologischer Abbaubarkeit positiv hervorheben. Zusätzlich soll das Produkt in der Nutzung bezüglich der Eigenschaften mit den aktuell sich auf dem Markt befindlichen Produkten vergleichbar sein. Das bedeutet, dass eine Mehrfachnutzung möglich ist, und das Substrat nicht durch Schimmel oder durch anderen unerwünschten Bewuchs nicht mehr nutzbar ist oder zerstört wird.

Diese Aufgabe wird erfindungsgemäß durch eine Holzfasermatte mit den Merkmalen des Anspruchs 1 und deren Herstellung in Verfahren gemäß der Ansprüche 13-15 gelöst.

Entsprechend wird eine Holzfasermatte zur Verwendung als Pflanzensubstrat bzw. Pflanzensubstratkomponente bereitgestellt, wobei die Holzfasermatte neben Holzfasern, mindestens ein biologisch abbaubares Bindemittel, und mindestens ein Mittel zur Absorption einer polaren Flüssigkeit, insbesondere Wasser, umfasst.

Bei einer Verwendung der vorliegenden Holzfasermatte als Pflanzensubstratkomponente z.B. im Gartenbau, ergeben sich eine Vielzahl von Vorteilen. So ist durch die Zugabe eines geeigneten Absorptionsmittels die Wasserspeicherkapazität signifikant erhöht und eine bedarfsgerechte Wasserzufuhr ist möglich, d.h. die Pflanze kann die Wasserzufuhr entsprechend ihres Bedarfes steuern. Auch ermöglicht die vorliegende Holzfasermatte ein einfaches Bewässern ohne großen Automatisierungsaufwand und eine einfache, ökologische Entsorgung.

In einer Ausführungsform der vorliegenden Holzfasermatte ist das mindestens eine Absorptionsmittel gleichmäßig (homogen) oder ungleichmäßig (inhomogen) in der Holzfasermatte verteilt.

Im Falle einer homogenen Verteilung des Absorptionsmittels in der Holzfasermatte ist das mindestens eine Absorptionsmittel bevorzugt gleichmäßig über die gesamte Dicke bzw. Breite der Holzfasermatte verteilt. Entsprechend weist das Absorptionsmittel in diesem Falle eine gleichmäßige Konzentration in der Holzfasermatte auf. Bevorzugterweise beträgt die Menge des Absorptionsmittels in der finalen Holzfasermatte bei einer gleichmäßigen Verteilung zwischen 1-10 Gew%, bevorzugt 1,5-5 Gew%, insbesondere bevorzugt 1,5 Gew% bezogen auf das Gesamtgewicht an Holzfasern.

Im Falle einer ersten Variante einer ungleichmäßigen Verteilung des Absorptionsmittels in der Holzfasermatte kann das mindestens eine Absorptionsmittel in mindestens einer vorbestimmten Lage der Holzfasermatte verteilt bzw. angeordnet sein. Entsprechend erfolgt die Verteilung des Absorptionsmittels innerhalb einer Schicht der Holzfasermatte, aus welcher das Absorptionsmittel in die angrenzenden Bereiche innerhalb der Holzfasermatte diffundieren kann.

In dieser Variante der Verteilung des Absorptionsmittels in einer Lage bzw. Schicht in der Holzfasermatte kann die Menge des Absorptionsmittels zwischen 10 und 100 g/m², bevorzugt 30 bis 80 g/m², insbesondere bevorzugt 50 bis 60 g/m² liegen. Der Vorteil der Anordnung des Absorptionsmittels in einer Lage innerhalb der Holzfasermatte ist insbesondere der, dass die Menge an Absorptionsmittel in Abhängigkeit von Pflanzengröße und Wasserbedarf bei der Herstellung der Holzfasermatte gesteuert werden kann, und zwar in einfacher Weise über die gestreute Menge des Absorptionsmittels.

In einer weiteren, zweiten Variante der ungleichmäßigen Verteilung des Absorptionsmittels in der Holzfasermatte kann das mindestens eine Absorptionsmittel lokal begrenzt in der Holzfasermatte vorgesehen sein. Eine lokal begrenzte Anordnung des Absorptionsmittels in der Holzfasermatte erfolgt zum Beispiel in einer in die Holzfasermatte eingebrachten Vertiefung (zum Beispiel Loch, Auskerbung etc.).

In einer besonders bevorzugten Ausführungsform der vorliegenden Holzfasermatte wird als das mindestens eine Absorptionsmittel ein Polymer auf Acrylbasis, insbesondere ein Copolymer aus Acrylsäure und Acrylat verwendet. Derartige Acrylhaltige Absorptionsmittel mit Partikelgrößen zwischen 100-1000 µm sind auch als Superabsorber bekannt, die in der Lage sind, ein Vielfaches ihres Eigengewichtes an polaren Flüssigkeiten wie zum Beispiel Wasser aufzunehmen. Bei Aufnahme der Flüssigkeit quillt der Superabsorber auf und bildet ein Hydrogel.

Im vorliegenden Falle besteht das Absorptionsmittel in einer besonders bevorzugten Ausführungsform aus einem Copolymer aus Kaliumpolyacrylat und Polyamid.

Generell ist auch der Einsatz weiterer Absorptionsmittel wie Tonmineralien, insbesondere von Schichtsilikaten, Kieselgel oder Aluminiumoxid einsetzbar.

In einer weitergehenden Ausführungsform der vorliegenden Holzfasermatte ist das mindestens eine biologisch abbaubare Bindemittel ein natürliches oder ein synthetisches Bindemittel.

Im Falle der Verwendung eines natürlichen Bindemittels als biologisch abbaubares Bindemittel ist dieses ausgewählt aus einer Gruppe enthaltend Stärke, Zellulosederivate, Chitosan, glutenhaltige Bindemittel, wie Hautleim, Knochenleim, Lederleim; milchproteinhaltige Bindemittel, insbesondere aus der Gruppe der Kaseine, und pflanzenproteinhaltige Bindemittel, insbesondere aus der Gruppe der Sojabindemittel.

Im Falle der Verwendung eines synthetischen Bindemittels als biologisch abbaubares Bindemittel ist dieses bevorzugt ausgewählt aus der Gruppe enthaltend verseiften Polyvinylalkohol, Polycaprolactam-Polyamid, Polylactat, aliphatische Polyesterharze, insbesondere Polybutylensuccinat, Polybutylensuccinat-Adipat, Polyethylen-Polypropylen-Verbundharz, wobei Polylactate besonders bevorzugt sind.

In einer besonders bevorzugten Ausführungsform werden Polymilchsäurefasern mit einer Länge 38 mm +/- 3 mm und einer Feinheit von 1,7 dtex verwendet.

Das zur Herstellung der Holzfasermatte verwendete Fasergemisch kann 60 bis 90 Gew%, bevorzugt 70 bis 80 Gew% an Holzfasern und 5 bis 20 Gew%, bevorzugt 10 bis 15 Gew%, insbesondere bevorzugt 10 Gew% an biologisch abbaubaren Bindemitteln umfassen.

Es ist weiterhin bevorzugt, wenn die vorliegende Holzfasermatte mindestens ein antimikrobielles Mittel umfasst. Das vorliegend zum Einsatz kommende antimikrobielle Mittel ist besonders wirksam gegen Bakterien, Hefen, Pilze oder Algen. So können als Fungizide Hinokitol oder auch Polyamine verwendet werden.

Das zum Einsatz kommende antimikrobielle Mittel dringt bevorzugt in die Zellwand der Mikroorganismen ein und fungiert als selektiver allosterischer Inhibitor von verschiedenen Enzymen, insbesondere von Enzymen der Zellwandbiosynthese oder der ribosomalen Proteinbiosynthese.

Es ist auch möglich, Desinfektionsmitteln als antimikrobielle Mittel einzusetzen. Hierzu zählen u.a. ionische Verbindungen mit antimikrobieller Wirkung, insbesondere Silber-Salze. Salze von Schwermetallen, wie z.B. Kupfer-Salze und halogenierte Substanzen sind hingegen aufgrund ihrer bekannten toxischen Wirkung von der Verwendung ausgeschlossen.

Eine weitere Alternative besteht in der Verwendung von antimikrobiell wirksamen Peptiden (AMP) oder auch Lysozym.

Das antimikrobielle Mittel kann in einer Menge zwischen 0,5-5 Gew%, bevorzugt 1-4 Gew%, insbesondere bevorzugt 2 Gew% bezogen auf die Menge an Holzfasern in der Holzfasermatte eingesetzt werden.

Bevorzugt wird das antimikrobielle Mittel auf die Oberseite des Faserkuchens aus Holzfasern und Bindemittel vor dem Verdichten und Kalibrieren aufgebracht. Es ist aber auch möglich und denkbar, das mindestens eine antimikrobielle Mittel direkt mit dem Gemisch aus Holzfasern, biologisch abbaubaren Bindemittel und Absorptionsmittel vor dem Auftrag auf das Transportband, d.h. vor der Ausbildung als Vorvlies in Kontakt zu bringen, z.B. durch Zugabe in der Blow-line.

In einer weiteren bevorzugten Ausführungsform sind in der vorliegenden Holzfasermatte Pflanzennährstoffe enthalten, die eine ausreichende Versorgung der Pflanzen mit Stickstoff, Phosphaten, Schwefel und anderen Spurenelementen gewährleisten. Eine zusätzliche Versorgung der Holzfasermatte mit Pflanzennährstoffen ist notwendig, da Holzfasern an sich einen niedrigen Nährstoffgehalt aufweisen. Allerdings bieten die Holzfasermatten den Vorteil, dass eine gezielte Einstellung des Nährstoffgehaltes durch Kalkung und Düngung möglich ist.

Die Zugabe der Pflanzennährstoffe erfolgt bevorzugt während oder im Anschluss an die Herstellung der Holzfasermatte.

Die Zugabe der Pflanzennährstoffe zu den Holzfasern kann in der Blow-Line erfolgen oder auf das Vorvlies aufgesprüht werden. Eine weitere Möglichkeit ist, dass die Nährstoffe mit dem Wasser der Pflanzmatte zugesetzt werden.

Die in der vorliegenden Holzfasermatte verwendeten Holzfasern sind trockene Holzfasern mit einer Länge von 1,0 mm bis 20 mm, bevorzugt 1,5 mm bis 10 mm und einer Dicke von 0,05 mm bis 1 mm. Die Holzfaserfeuchte der verwendeten Fasern liegt dabei in einem Bereich zwischen 5 und 15 %, bevorzugt 6 und 12 %, insbesondere bevorzugt bei 10% bezogen auf das Gesamtgewicht der Holzfasern

Die vorliegende Holzfasermatte weist eine Dicke zwischen 20 und 200 mm, bevorzugt 50 und 150 mm, insbesondere bevorzugt 80 und 100 mm auf.

Die Rohdichte der vorliegenden Holzfasermatte beträgt 50-250 kg/m³, bevorzugt 70-170 kg/m³, insbesondere bevorzugt 100-140 kgm³.

Die vorliegende Holzfasermatte weist eine Vielzahl von Vorteilen auf.

So besteht nach wie vor ein sehr großer Bedarf an erdelosen Substraten. Holzfasern haben als Substrat nachgewiesen, das sich ein hoher Grad an Lufteinschluss sehr positiv auf das Pflanzenwachstum auswirkt.

Durch die gezielte Beigabe eines Absorptionsmittels, wie z.B. eines Superabsorbers, die ohnehin schon durch ihre hydrophilen Komponenten gut Wasser aufnehmen kann, wird die Wasserspeicherkapazität zusätzlich erhöht.

Durch die Verwendung eines biologisch abbaubaren Bindemittel z.B. in Form von Bindemittelfasern ist eine ökologische Entsorgung möglich. Zudem kann die vorliegende Holzfasermatte für mehr als eine Wachstumsperiode eingesetzt werden, was durch die Zugabe von antimikrobiellen Mitteln unterstütz wird und wodurch die Holzfasermatte vor dem Bewuchs mit Schimmel und anderen Mikroorganismen geschützt ist.

Die vorliegende Holzfasermatte stellt somit eine ökologische und ökonomische Alternative zu den bisher nach wie vor im großen Maßstab abgebauten Torfen dar.

Wie oben ausgeführt, kann die vorliegende Holzfasermatte als Pflanzensubstrat bzw. Substratkomponente in der Landwirtschaft oder im Gartenbau zum Einsatz kommen. Insbesondere eine Verwendung der Holzfasermatte zur Dachbegrünung oder auch zur Pflanzenaufzucht ist vorstellbar.

Soll die vorliegende Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht. In diese Vertiefung werden Samen o.ä. in Verbindung mit Wasser und ggf. mit dem Absorptionsmittel wie einem Superabsorbergranulat eingefügt, wobei das sich in der Vertiefung befindliche und/oder der Holzfasermatte eingebaute Absorptionsmittel das Wasser absorbiert und dem Samen zur Verfügung stellt (Phase A). Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

Eine erste Ausführungsform der vorliegenden Holzfasermatte, insbesondere mit einer gleichmäßigen Verteilung des Absorptionsmittels in der Holzfasermatte, kann in einem Verfahren mit den folgenden Schritten hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, der Mischung aus Holzfasern und dem mindestens einem zur Vernetzung der Holzfasern geeigneten biologisch abbaubaren Bindemittel auf ein erstes Transportband unter Ausbildung eines Vorvlieses,
   c1) Verteilen bzw. Aufstreuen von mindestens einem Absorptionsmittel auf das Vorvlies,
   c2) Zerfasern des Vorvlieses, Vermischung und Aufbringen der Fasermischung auf ein zweites Transportband unter Ausbildung eines Faserkuchens
d) Aufsprühen von mindestens einem antimikrobiellen Mittel auf den Faserkuchen, insbesondere die Oberseite des Faserkuchens, und
e) Erwärmen und Verdichten des Faserkuchens zu einer Holzfasermatte.

Zur Herstellung der Holzfasern gemäß Schritt a) werden die Holzhackschnitzel zunächst gereinigt, anschließend zerfasert und getrocknet.

Das In-Kontaktbringen der Holzfasern mit dem mindestens einen Bindemittel in Schritt b) erfolgt bevorzugt in einem Blow-Line-Verfahren, bei dem das Bindemittel in den Holzfaserstrom eingespritzt wird. Hierbei ist es möglich, dass die beschriebenen Bindemittel zur Holzfaservernetzung in der Blow-Line einem Holzfaser-Dampfgemisch zugeführt werden. Im Falle der Verwendung von Bindemittel-Fasern werden diese hingegen den trockenen Holzfasern zugemischt.

Es ist ebenfalls vorstellbar, dass mehr als ein Bindemittel zur Vernetzung der Holzfasern verwendet werden. So können Gemische aus natürlichen und synthetisch biologisch abbaubaren Bindemitteln verwendet werden.

Es ist auch denkbar, das Bindemittel zur Vernetzung der Holzfasern während des Dämpfens der Hackschnitzel einzuführen oder im Refiner zuzugeben. Dabei können 5 bis 20 Gew%, bevorzugt 10 bis 15 Gew % an Bindemittel auf die Holzfasern aufgetragen werden.

Es ist aber auch denkbar, das Bindemittel mittels Trockenbeleimung mit den Holzfasern in Kontakt zu bringen. Das Bindemittel wird hier durch extrem feines Verdüsen auf die getrockneten Holzfasern aufgebracht. Eine derartige Trockenbeleimung reduziert den Leimverbrauch gegenüber einer Blow-Line-Beleimung drastisch.

Gemäß der oben beschriebenen Variante des Herstellungsverfahrens können die Holzfasern und das biologisch abbaubare Bindemittel z.B. in Form von Bindefasern wie PLA-Fasern über einer Blasleitung geführt und auf ein erstes Transportband aufgeblasen werden. In der Blasleitung erfolgt dabei eine intensive Vermischung von Holzfasern und Bindemittel und gegebenenfalls weiteren Komponenten durch die eingeblasene Luft als Transportmittel. Die Menge an zugeführtem Fasergemisch richtet sich nach der gewünschten Schichtdicke und der gewünschten Rohdichte der herzustellenden Holzfasermatte.

Nach Ablage der Mischung aus Holzfasern und Bindemittel und gegebenenfalls weiteren Komponenten auf dem ersten Transportband wird vorliegend unter Verwendung eines Pulverstreuers (Hersteller: z.B. Fa. TPS) das mindestens eine Absorptionsmittel, insbesondere in Form eines Copolymers aus Acrylamid und Kaliumacrylat, auf das gebildete Vorvlies aufgestreut. Am Ende des ersten Transportbandes wird das mit dem Absorptionsmittel versetzte Vorvlies zerfasert und nach nochmaliger Vermischung auf ein zweites Transportband aufgeblasen. Die Dicke der erhaltenen Matte wird dabei durch die Umlaufgeschwindigkeit des zweiten Transportbandes eingestellt.

Der so erhaltene Faserkuchen wird bevorzugt auf der Oberseite mit mindestens einem antimikrobiellen Mittel versehen und anschließend in einen Ofen überführt, in welchem die abschließende Kalibrierung und/oder Verdichtung erfolgt.

Der Schritt des Verdichtens erfolgt bei Temperaturen zwischen 120°C und 220°C, bevorzugt 150°C und 200°C, insbesondere 170 °C und 180°C, wobei der Faserkuchen auf eine Dicke zwischen 20 und 200 mm, bevorzugt 50 und 150mm, insbesondere bevorzugt 80 und 100 mm verdichtet wird.

In der Endbearbeitung wird die Fasermatte schließlich auf die gewünschten Maße reduziert und gekühlt; die Kühlung erfolgt bevorzugt während der Kalibrierung und in der Kühlzone des Durchlaufofens.

Eine weitere zweite Variante der vorliegenden Holzfasermatte, insbesondere eine Variante mit einer begrenzten Verteilung des Absorptionsmittels auf eine Schicht bzw. Lage innerhalb der Holzfasermatte, kann in einem weiteren modifizierten Verfahren mit den folgenden Schritten hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, einer ersten Menge einer Mischung aus Holzfasern und dem mindestens einem zur Vernetzung der Holzfasern geeigneten biologisch abbaubaren Bindemittel auf ein Transportband unter Ausbildung eines Vorvlieses,
   c1) Verteilen bzw. Aufstreuen des mindestens einen Absorptionsmittels auf das Vorvlies aus Holzfasern und Bindemittel;
   c3) Aufbringen einer zweiten Menge einer Mischung aus Holzfasern und dem mindestens einem zur Vernetzung der Holzfasern geeigneten biologisch abbaubaren Bindemittel unter Ausbildung eines Faserkuchens,
d) Aufsprühen von mindestens einem antimikrobiellen Mittel auf den Faserkuchen, und
e) Erwärmen und Verdichten des Faserkuchens zu einer Holzfasermatte.

Gemäß dieser Verfahrensvariante wird demnach zunächst eine erste Lage eine Fasergemisches aus Holzfasern und Bindemittel (z.B. in einer Menge zwischen 1000 und 2000 g/m², bevorzugt 1500 g/m²) auf das Transportband aufgeblasen oder aufgestreut, anschließend das Absorptionsmittel als zweite Lage auf dieses Fasergemisch oder auch Vorvlies aufgebracht und anschließend eine weitere, dritte Lage eines Fasergemisches aus Holzfasern und Bindemittel (z.B. in einer Menge zwischen 2000 und 3000 g/m², bevorzugt 2500 g/m²) auf das Vorvlies aufgebracht. Entsprechend ist das Absorptionsmittel in diesem Fall als zweidimensionale Lage oder Schicht innerhalb der Holzfasermatte eingetragen, wodurch eine inhomogene Verteilung des Absorptionsmittels in der Holzfasermatte bewirkt wird. Aufgrund dieser spezifischen schichtförmigen Anordnung des Absorptionsmittels ist die Konzentration desselbigen innerhalb der Holzfasermatte lokal erhöht.

Eine dritte Variante der vorliegenden Holzfasermatte, insbesondere mit einer lokal begrenzten Anordnung bzw. Aufnahme des Absorptionsmittels innerhalb der Holzfasermatte, kann mit dem folgenden Verfahren hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, einer Mischung aus Holzfasern und dem mindestens einem zur Vernetzung der Holzfasern geeigneten biologisch abbaubaren Bindemittel auf ein Transportband unter Ausbildung eines Faserkuchens,
d) Aufsprühen von mindestens einem antimikrobiellen Mittel auf den Faserkuchen,
e) Erwärmen und Verdichten des Faserkuchens zu einer Holzfasermatte,
f) optional Konfektionierung der Holzfasermatte (Besäumen, Zuschneiden);
g) Einfügen von mindestens einer Vertiefung in die Holzfasermatte, und
h) Einbringen des mindestens einen Absorptionsmittels in die Vertiefung, insbesondere zusammen mit einem Pflanzensamen oder einer Jungpflanze.

In dieser Verfahrensvariante wird demnach das Absorptionsmittel erst nach dem Verpressen bzw. Verdichten in die Matte an einer vorbestimmten Lokalisation eingebracht. Der Vorteil dieser Variante besteht darin, dass die Holzfasermatte während der Lagerung und somit vor der eigentlichen Benutzung als Substratkomponente keine unnötige Feuchtigkeit aufnimmt und somit eventuelle Schimmel- oder Verrottungsprozesse der Holzfasermatte aufgrund eines erhöhten Feuchtigkeitsgehaltes vermieden werden.

Pro Vertiefung bzw. Loch kann die Menge an eingebrachten Absorptionsmittel zwischen 1 und 50 g, bevorzugt zwischen 1 und 20 g, insbesondere bevorzugt zwischen 1 und 10 g betragen. Auch hier ist die Menge von der Pflanzengröße, der Größe der Vertiefung und dem Wasserbedarf abhängig.

Die Erfindung wird nachfolgend unter Bezugnahme auf die Figuren der Zeichnungen an mehreren Ausführungsbeispielen näher erläutert. Es zeigen:
- Figur 1: eine schematische Darstellung der Verwendung einer ersten Ausführungsform der erfindungsgemäßen Holzfasermatte;
- Figur 2: eine schematische Darstellung der Verwendung einer zweiten Ausführungsform der erfindungsgemäßen Holzfasermatte; und
- Figur 3: eine schematische Darstellung der Verwendung einer dritten Ausführungsform der erfindungsgemäßen Holzfasermatte;

### Ausführungsbeispiel 1: Holzfasermatte mit gleichmäßiger Verteilung des Absorptionsmittels

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Aus den Fasern wird durch Aufblasen auf ein Transportband eine Matte erzeugt. Über einen Pulverstreuer wird Accepta 4303 zu dosiert (1,5 Gew% bezogen auf Fasern). Bei dem Produkt handelt es sich um ein Copolymer aus Acrylamid und Kaliumacrylat.

Danach erfolgen eine nochmalige Vermischung und ein Ablegen auf ein Transportband. Es werden ca. 4000 g Fasern/m² gestreut. Danach werden auf den Faserkuchen auf der Oberseite mit Hilfe einer Besprühungsapparatur ca. 2 Gew% von PAT 964 Ecoban als antimikrobielles Mittel aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet. Aus der Endlosfaser-Matte werden Zuschnitte oder Rollenware erzeugt.

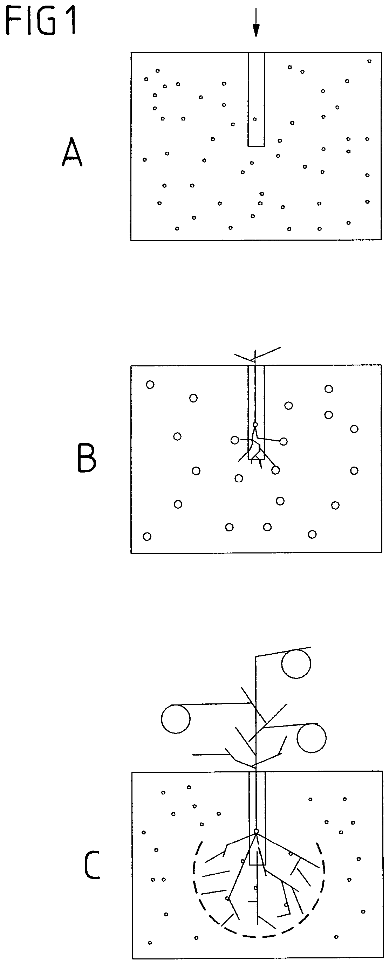

Soll die so hergestellte Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht (siehe Figur 1).

In diese Vertiefung werden Samen o.ä. in Verbindung mit Wasser eingefügt (Phase A), wobei das in der Holzfasermatte gleichmäßig verteilte Absorptionsmittel das Wasser absorbiert und dem Samen zur Verfügung stellt. Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

### Ausführungsbeispiel 2: Holzfasermatte mit Anordnung des Absorptionsmittels als separate Lage

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Auf ein Transportband werden 1500 g Fasern/m² gestreut. Über einen Pulverstreuer wird Accepta 4303 zu dosiert (1,5 Gew.% bezogen auf Fasern). Danach werden auf die bereits vorhandene Matte nochmals 2500 g Fasern/m² aufgebracht.

Danach werden auf den Faserkuchen auf der Oberseite mit Hilfe einer Besprühungsapparatur ca. 2 Gew. % von PAT 964 Ecoban aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet. Aus der Endlosfaser-Matte werden Zuschnitte oder Rollenware erzeugt.

Eine Probe aus diesem Anwendungsbeispiel wurde zusammen mit einer Nullprobe (ohne Ecoban) in einem Exsikkator bei 100 % rel. Luftfeuchte über zwei Monate gelagert. Im Wochenrhythmus wurde auf Schimmel geprüft. Bei der Nullprobe war nach vier Wochen eine deutliche Schimmelbildung zu beobachten. Bei der Probe aus dem Versuch war selbst nach zwei Monaten keine Schimmelbildung erkennbar.

| | Nullprobe | Probe aus Ausführungsbeispiel 2 |
|---|---|---|
| Schimmelbildung | Nach vier Wochen deutlich sichtbare Schimmelbildung | Nach acht Wochen keine Schimmelbildung |

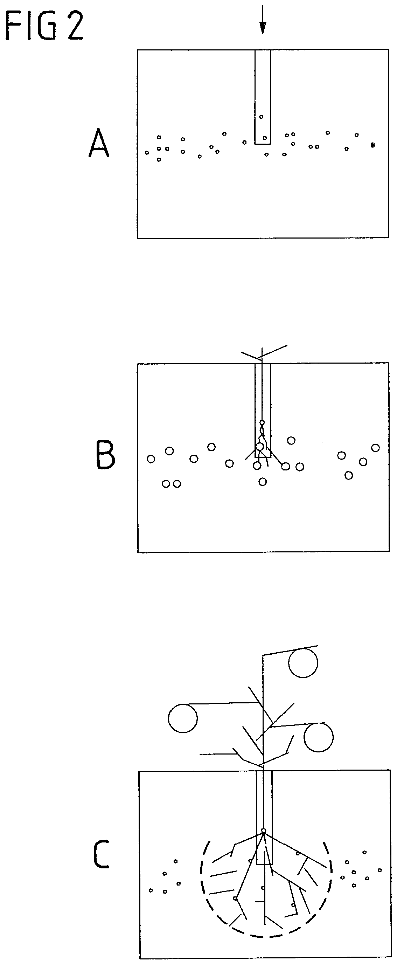

Soll die so hergestellte Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht (siehe Figur 2).

In diese Vertiefung werden Samen o.ä. in Verbindung mit Wasser eingefügt (Phase A), wobei das in der Holzfasermatte gleichmäßig verteilte Absorptionsmittel das Wasser absorbiert und dem Samen zur Verfügung stellt. Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

### Ausführungsbeispiel 3: Holzfasermatte mit lokaler Anordnung des Absorptionsmittels in einer Vertiefung

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Aus den Fasern wird durch Aufblasen auf ein Transportband eine Matte erzeugt. Es werden ca. 4000 g Fasern/m² gestreut.

Danach werden auf den Faserkuchen auf der Oberseite mit Hilfe einer Besprühungsapparatur ca. 2 Gew. % von PAT 964 Ecoban aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet.

Aus der Endlosfaser-Matte werden Zuschnitte oder Rollenware erzeugt. Nach der Platzierung der Matten in einem Gewächshaus, wird je nach Pflanzenart und gewünschtem Bewuchs in ein Loch in der Pflanzmatte die gewünschte/benötigte Menge Superabsorber zusammen mit dem Samen der Pflanze oder der Jungpflanze eingebracht. Es handelt sich dabei wieder um Accepta 4303. Bei dem Produkt handelt es sich um ein Copolymer aus Acrylamid und Kaliumacrylat.

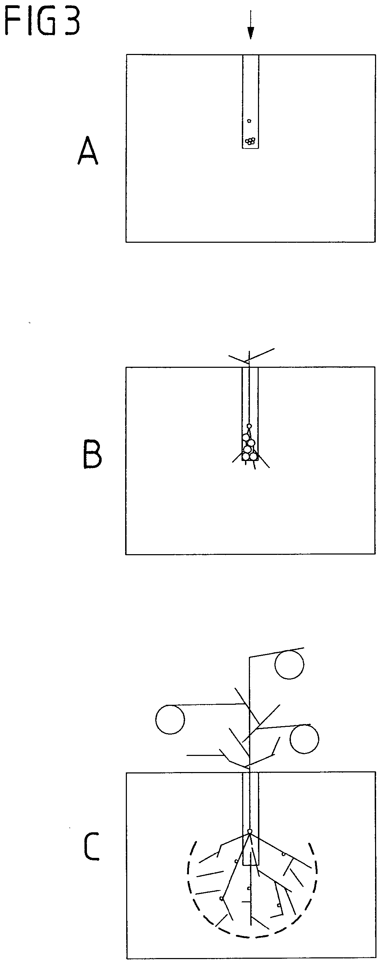

Soll die vorliegende Holzfasermatte nun z.B. zur Aufzucht von Pflanzenkeimlingen verwendet werden, wird in die bereits gefertigte Vertiefung bzw. Loch zusätzlich zum Absorptionsmittel der Samen mit Wasser eingebracht (siehe Figur 3), wobei das sich in der Vertiefung befindliche und/oder der Holzfasermatte eingebaute Absorptionsmittel das Wasser absorbiert und dem Samen zur Verfügung stellt (Phase A). Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

## Patentansprüche

1. Holzfasermatte mit einer Rohdichte von 50 bis 250 Kg/m³ zur Verwendung als Pflanzensubstrat
umfassend
- Holzfasern
- mindestens ein biologisch abbaubares Bindemittel, und
- mindestens ein Mittel zur Absorption einer polaren Flüssigkeit, insbesondere Wasser.

2. Holzfasermatte nach Anspruch 1, **dadurch gekennzeichnet, dass** das mindestens eine Absorptionsmittel gleichmäßig und/oder ungleichmäßig in der Holzfasermatte verteilt ist.

3. Holzfasermatte nach Anspruch 1 oder 2, **dadurch gekennzeichnet, dass** das mindestens eine Absorptionsmittel gleichmäßig über die gesamte Dicke der Holzfasermatte verteilt ist.

4. Holzfasermatte nach Anspruch 1 oder 2, **dadurch gekennzeichnet, dass** das mindestens eine Absorptionsmittel in mindestens einer vorbestimmten Lage der Holzfasermatte verteilt ist.

5. Holzfasermatte nach Anspruch 1 oder 2, **dadurch gekennzeichnet, dass** das mindestens eine Absorptionsmittel lokal begrenzt in der Holzfasermatte angeordnet ist.

6. Holzfasermatte nach einem der vorhergehenden Ansprüche, **dadurch gekennzeichnet, dass** das mindestens eine Absorptionsmittel ein Polymer auf Acrylbasis, insbesondere ein Copolymer aus Acrylsäure und Acrylat ist.

7. Holzfasermatte nach einem der vorhergehenden Ansprüche, **dadurch gekennzeichnet, dass** das mindestens eine biologisch abbaubare Bindemittel ein natürliches oder ein synthetisches Bindemittel ist.

8. Holzfasermatte nach Anspruch 7, **dadurch gekennzeichnet, dass** das natürliche Bindemittel ausgewählt ist aus einer Gruppe enthaltend Stärke, Zellulosederivate, Chitosan, glutenhaltige Bindemittel, insbesondere Hautleim, Knochenleim, Lederleim; milchproteinhaltige Bindemittel, insbesondere aus der Gruppe der Kaseine, und pflanzenproteinhaltige Bindemittel, insbesondere aus der Gruppe der Sojabindemittel.

9. Holzfasermatte nach Anspruch 7, **dadurch gekennzeichnet, dass** das synthetische Bindemittel ausgewählt ist aus der Gruppe enthaltend verseiften Polyvinylalkohol, Polycaprolactam-Polyamid, Polylactat, aliphatische Polyesterharze, insbesondere Polybutylensuccinat, Polybutylensuccinat-Adipat, Polyethylen-Polypropylen-Verbundharz, wobei Polylactate besonders bevorzugt sind.

10. Holzfasermatte nach einem der vorhergehenden Ansprüche, **gekennzeichnet durch** mindestens ein antimikrobielles Mittel.

11. Holzfasermatte nach einem der vorhergehenden Ansprüche, **dadurch gekennzeichnet, dass** in der Holzfasermatte Pflanzennährstoffe enthalten sind.

12. Verwendung einer Holzfasermatte nach einem der vorhergehenden Ansprüche als Pflanzensubstrat.

13. Verfahren zur Herstellung einer Holzfasermatte nach einem der Ansprüche 1-3, 6-11 umfassend die Schritte:
a) Herstellen von Holzfasern aus lignozellulosehaltigem Ausgangsmaterial,
b) In-Kontaktbringen der Holzfasern mit mindestens einem zur Vernetzung der Holzfasern geeigneten biologisch abbaubaren Bindemittel,
c) Aufbringen der Mischung aus Holzfasern und dem mindestens einem zur Vernetzung der Holzfasern geeigneten biologisch abbaubaren Bindemittel auf ein erstes Transportband unter Ausbildung eines Vorvlieses,
c1) Verteilen bzw. Aufstreuen von mindestens einem Absorptionsmittel auf das Vorvlies,
c2) Zerfaserung des Vorvlieses, Vermischung und Aufbringen der Fasermischung auf ein zweites Transportband unter Ausbildung eines Faserkuchens
d) Aufsprühen von mindestens einem antimikrobiellen Mittel auf den Faserkuchen, insbesondere die Oberseite des Faserkuchens, und
e) Erwärmen und Verdichten des Faserkuchens zu einer Holzfasermatte.

14. Verfahren zur Herstellung einer Holzfasermatte nach einem der Ansprüche 1-2, 4, 6-11 umfassend die Schritte:
a) Herstellen von Holzfasern aus lignozellulosehaltigem Ausgangsmaterial,
b) In-Kontaktbringen der Holzfasern mit mindestens einem zur Vernetzung der Holzfasern geeigneten biologisch abbaubaren Bindemittel,
c) Aufbringen einer ersten Menge einer Mischung aus Holzfasern und dem mindestens einem zur Vernetzung der Holzfasern geeigneten biologisch abbaubaren Bindemittel auf ein Transportband unter Ausbildung eines Vorvlieses,
c1) Verteilen bzw. Aufstreuen des mindestens einen Absorptionsmittels auf das Vorvlies aus Holzfasern und Bindemittel;
c3) Aufbringen einer zweiten Menge einer Mischung aus Holzfasern und dem mindestens einem zur Vernetzung der Holzfasern geeigneten biologisch abbaubaren Bindemittel unter Ausbildung eines Faserkuchens,
d) Aufsprühen von mindestens einem antimikrobiellen Mittel auf den Faserkuchen, und
e) Erwärmen und Verdichten des Faserkuchens zu einer Holzfasermatte.

15. Verfahren zur Herstellung einer Holzfasermatte nach einem der Ansprüche 1-2, 5-11 umfassend die Schritte:
a) Herstellen von Holzfasern aus lignozellulosehaltigem Ausgangsmaterial,
b) In-Kontaktbringen der Holzfasern mit mindestens einem zur Vernetzung der Holzfasern geeigneten biologisch abbaubaren Bindemittel,
c) Aufbringen einer Mischung aus Holzfasern und dem mindestens einem zur Vernetzung der Holzfasern geeigneten biologisch abbaubaren Bindemittel auf ein Transportband unter Ausbildung eines Faserkuchens,
d) Aufsprühen von mindestens einem antimikrobiellen Mittel auf den Faserkuchen,
e) Erwärmen und Verdichten des Faserkuchens zu einer Holzfasermatte,
f) optional Konfektionieren der Holzfasermatte;
g) Einfügen von mindestens einer Vertiefung in die Holzfasermatte, und
h) Einbringen des mindestens einen Absorptionsmittels in die Vertiefung, insbesondere zusammen mit einem Pflanzensamen oder einer Jungpflanze.

## Claims

1. Wood fibre mat having a bulk density of from 50 to 250 kg/m³ for use as a plant substrate,
comprising
- wood fibres,
- at least one biodegradable binder, and
- at least one agent for absorbing a polar liquid, in particular water.

2. Wood fibre mat according to Claim 1, **characterized in that** the at least one absorbing agent is distributed uniformly and/or non-uniformly in the wood fibre mat.

3. Wood fibre mat according to Claim 1 or 2, **characterized in that** the at least one absorbing agent is distributed uniformly over the entire thickness of the wood fibre mat.

4. Wood fibre mat according to Claim 1 or 2, **characterized in that** the at least one absorbing agent is distributed in at least one predetermined ply of the wood fibre mat.

5. Wood fibre mat according to Claim 1 or 2, **characterized in that** the at least one absorbing agent is arranged in a locally limited manner in the wood fibre mat.

6. Wood fibre mat according to one of the preceding claims, **characterized in that** the at least one absorbing agent is an acrylic-based polymer, in particular a copolymer of acrylic acid and acrylate.

7. Wood fibre mat according to one of the preceding claims, **characterized in that** the at least one biodegradable binder is a natural binder or a synthetic binder.

8. Wood fibre mat according to Claim 7, **characterized in that** the natural binder is selected from a group comprising starch, cellulose derivatives, chitosan, gluten-containing binders, in particular hide glue, bone glue, leather glue; binders containing milk protein, in particular from the group of the caseins, and binders containing plant protein, in particular from the group of the soya binders.

9. Wood fibre mat according to Claim 7, **characterized in that** the synthetic binder is selected from the group comprising saponified polyvinyl alcohol, polycaprolactam-polyamide, polylactate, aliphatic polyester resins, in particular polybutylene succinate, polybutylene succinate adipate, polyethylene-polypropylene composite resin, wherein polylactates are particularly preferred.

10. Wood fibre mat according to one of the preceding claims, **characterized by** at least one antimicrobial agent.

11. Wood fibre mat according to one of the preceding claims, **characterized in that** plant nutrients are contained in the wood fibre mat.

12. Use of a wood fibre mat according to one of the preceding claims as a plant substrate.

13. Method for producing a wood fibre mat according to one of Claims 1-3, 6-11, comprising the steps:
a) producing wood fibres from lignocellulosic starting material,
b) bringing the wood fibres into contact with at least one biodegradable binder suitable for crosslinking the wood fibres,
c) applying the mixture of wood fibres and the at least one biodegradable binder suitable for crosslinking the wood fibres to a first conveyor belt to form a preliminary fleece,
c1) distributing or scattering at least one absorbing agent on the preliminary fleece,
c2) defibrating the preliminary fleece, mixing and applying the fibre mixture to a second conveyor belt to form a fibre cake,
d) spraying at least one antimicrobial agent onto the fibre cake, in particular onto the upper side of the fibre cake, and
e) heating and compressing the fibre cake to form a wood fibre mat.

14. Method for producing a wood fibre mat according to one of Claims 1-2, 4, 6-11, comprising the steps:
a) producing wood fibres from lignocellulosic starting material,
b) bringing the wood fibres into contact with at least one biodegradable binder suitable for crosslinking the wood fibres,
c) applying a first amount of a mixture of wood fibres and the at least one biodegradable binder suitable for crosslinking the wood fibres to a conveyor belt to form a preliminary fleece,
c1) distributing or scattering the at least one absorbing agent on the preliminary fleece of wood fibres and binder,
c3) applying a second amount of a mixture of wood fibres and the at least one biodegradable binder suitable for crosslinking the wood fibres to form a fibre cake,
d) spraying at least one antimicrobial agent onto the fibre cake, and
e) heating and compressing the fibre cake to form a wood fibre mat.

15. Method for producing a wood fibre mat according to one of Claims 1-2, 5-11, comprising the steps:
a) producing wood fibres from lignocellulosic starting material,
b) bringing the wood fibres into contact with at least one biodegradable binder suitable for crosslinking the wood fibres,
c) applying a mixture of wood fibres and the at least one biodegradable binder suitable for crosslinking the wood fibres to a conveyor belt to form a fibre cake,
d) spraying at least one antimicrobial agent onto the fibre cake,
e) heating and compressing the fibre cake to form a wood fibre mat,
f) optionally finishing the wood fibre mat,
g) inserting at least one depression into the wood fibre mat, and
h) introducing the at least one absorbing agent into the depression, in particular together with a plant seed or a young plant.

## Revendications

1. Tapis de fibres de bois avec une masse volumique de 50 à 250 Kg/m³ destiné à être utilisé comme substrat végétal
comprenant
- des fibres de bois
- au moins un liant biodégradable, et
- au moins un moyen d'absorption d'un liquide polaire, en particulier de l'eau.

2. Tapis de fibres de bois selon la revendication 1, **caractérisé en ce que** l'au moins un moyen d'absorption est distribué de manière uniforme et/ou de manière non uniforme dans le tapis de fibres de bois.

3. Tapis de fibres de bois selon la revendication 1 ou 2, **caractérisé en ce que** l'au moins un moyen d'absorption est distribué de manière uniforme sur toute l'épaisseur du tapis de fibres de bois.

4. Tapis de fibres de bois selon la revendication 1 ou 2, **caractérisé en ce que** l'au moins un moyen d'absorption est distribué dans au moins une couche prédéterminée du tapis de fibres de bois.

5. Tapis de fibres de bois selon la revendication 1 ou 2, **caractérisé en ce que** l'au moins un moyen d'absorption est agencé de façon localement limitée dans le tapis de fibres de bois.

6. Tapis de fibres de bois selon l'une quelconque des revendications précédentes, **caractérisé en ce que** l'au moins un moyen d'absorption est un polymère à base acrylique, en particulier un copolymère d'acide acrylique et acrylate.

7. Tapis de fibres de bois selon l'une quelconque des revendications précédentes, **caractérisé en ce que** l'au moins un liant biodégradable est un liant naturel ou un liant synthétique.

8. Tapis de fibres de bois selon la revendication 7, **caractérisé en ce que** le liant naturel est choisi dans un groupe comprenant l'amidon, les dérivés de cellulose, le chitosane, les liants contenant du gluten, en particulier colle de peau, colle d'os, colle de cuir ; les liants contenant des protéines lactiques, en particulier du groupe des caséines, et les liants contenant des protéines végétales, en particulier du groupe des liants au soja.

9. Tapis de fibres de bois selon la revendication 7, **caractérisé en ce que** le liant synthétique est choisi dans le groupe comprenant l'alcool polyvinylique saponifié, le polyamide polycaprolactame, le polylactate, les résines polyesters aliphatiques, en particulier polybutylène-succinate, polybutylène-succinate adipate, résine composite polyéthylène-polypropylène, dans lequel le polylactate est particulièrement préféré.

10. Tapis de fibres de bois selon l'une quelconque des revendications précédentes, **caractérisé par** au moins un moyen antimicrobien.

11. Tapis de fibres de bois selon l'une quelconque des revendications précédentes, **caractérisé en ce que** le tapis de fibres de bois contient des nutriments végétaux.

12. Utilisation d'un tapis de fibres de bois selon l'une quelconque des revendications précédentes comme substrat végétal.

13. Procédé de fabrication d'un tapis de fibres de bois selon l'une quelconque des revendications 1-3, 6-11 comprenant les étapes de :
a) fabrication de fibres de bois à partir d'un matériel de départ contenant de la lignocellulose,
b) mise en contact des fibres de bois avec au moins un liant biodégradable adapté pour la réticulation des fibres de bois,
c) application du mélange de fibres de bois et de l'au moins un liant biodégradable adapté pour la réticulation des fibres de bois sur une première bande transporteuse en formant un non-tissé initial,
c1) distribution ou épandage d'au moins un moyen d'absorption sur le non-tissé initial,
c2) défibrage du non-tissé initial, mélange et application du mélange de fibres sur une deuxième bande transporteuse en formant un gâteau de fibres,
d) pulvérisation d'au moins un moyen antimicrobien sur le gâteau de fibres, en particulier la face supérieure du gâteau de fibres, et
e) chauffage et compression du gâteau de fibres en un tapis de fibres de bois.

14. Procédé de fabrication d'un tapis de fibres de bois selon l'une quelconque des revendications 1-2, 4, 6-11 comprenant les étapes de :
a) fabrication de fibres de bois à partir d'un matériel de départ contenant de la lignocellulose,
b) mise en contact des fibres de bois avec au moins un liant biodégradable adapté pour la réticulation des fibres de bois,
c) application d'une première quantité d'un mélange de fibres de bois et de l'au moins un liant biodégradable adapté pour la réticulation des fibres de bois sur une bande transporteuse en formant un non-tissé initial,
c1) distribution ou épandage de l'au moins un moyen d'absorption sur le non-tissé initial en fibres de bois et liant ;
c3) application d'une deuxième quantité d'un mélange de fibres de bois et de l'au moins un liant biodégradable adapté pour la réticulation des fibres de bois en formant un gâteau de fibres,
d) pulvérisation d'au moins un moyen antimicrobien sur le gâteau de fibres, et
e) chauffage et compression du gâteau de fibres en un tapis de fibres de bois.

15. Procédé de fabrication d'un tapis de fibres de bois selon l'une quelconque des revendications 1-2, 5-11 comprenant les étapes de :
a) fabrication de fibres de bois à partir d'un matériel de départ contenant de la lignocellulose,
b) mise en contact des fibres de bois avec au moins un liant biodégradable adapté pour la réticulation des fibres de bois,
c) application d'un mélange de fibres de bois et de l'au moins un liant biodégradable adapté pour la réticulation des fibres de bois sur une bande transporteuse en formant un gâteau de fibres,
d) pulvérisation d'au moins un moyen antimicrobien sur le gâteau de fibres,
e) chauffage et compression du gâteau de fibres en un tapis de fibres de bois,
f) confection optionnelle du tapis de fibres de bois ;
g) insertion d'au moins un évidement dans le tapis de fibres de bois, et
h) introduction de l'au moins un moyen d'absorption dans l'évidement, en particulier avec une graine de plante ou un jeune plant.
